# EUROPEAN PATENT SPECIFICATION

(11) **EP 4 065 825 B1**
(45) Date of publication and mention of the grant of the patent: **04.10.2023**
(21) Application number: 20789091.4
(22) Date of filing: 08.10.2020
(51) Int. Cl.: F01N 3/20, F01N 9/00, F01N 13/00

(54) **DUAL SCR SYSTEM CONTROL METHOD**
REGELUNGSMETHODE EINES DUALEN SCR-SYSTEMS
PROCÉDÉ DE CONTRÔLE D'UN SYSTÈME RCS DUALE

(30) Priority: 25.11.2019 GB 201917136
(43) Date of publication of application: 05.10.2022
(73) Proprietor: Borgwarner Luxembourg Automotive Systems SA, 4940 Bascharage (LU)
(72) Inventor: PARMENTIER, Michael, 6747 CHATILLON (BE); BRUGEAS, Thomas, 54400 Longwy (FR)
(74) Representative: Office Freylinger
(86) International application number: PCT/EP2020/078315
(87) International publication number: WO 2021/104733

(56) References cited:
- EP-A1- 3 486 444
- DE-A1-102015 207 881
- US-A1- 2017 130 637
- US-A1- 2018 230 878
- US-A1- 2019 195 114
- US-B2- 9 822 683

## Description

### TECHNICAL FIELD

This application relates to a method of controlling catalytic units operation in a vehicle exhaust system, such as those including Selective Catalytic Reduction (SCR) units where stored ammonia therein converts NOx. It has particular application to exhaust systems which comprise a first SCR unit upstream of a second SCR unit and where each SCR unit has a corresponding urea (reductant) doser unit located upstream thereof. The dosers dose urea which is converted to ammonia (NH3) for the corresponding SCR unit. It has particular application to a method of controlling the reductant (urea) dosing in the said dosers.

### BACKGROUND OF THE INVENTION

Particularly in Diesel applications for CN6b and Euro 6d / Euro7 markets there will be a requirement for improved control of emissions and thus this will require more complex after treatment systems in vehicle exhausts than CN6a or Euro 6d-temp.

One typical variant consists of dual SCR catalysts (i.e. two serially located SCR units) combined with two corresponding separate urea/reductant (e.g. Adblue) dosers therefor. In the exhaust system of such system is a first SCR unit located upstream of a second (downstream) SCR unit. The second SCR unit is often referred to as an Under-Floor SCR unit (UF SCR), and the first one is often a combined Diesel particulate filter (DPF) with SCR functionality; often referred to as a SDPF. Hereinafter reference to SDPF can be interpreted as reference and interchangeable to the first (upstream) SCR unit and reference to the UF SCR can be interpreted as reference and interchangeable to the second (downstream) SCR unit

Above 450-500°C, most of the NH3 (from urea) is oxidized in the SDPF and can then not convert NOx Adding a second doser at a colder location allows NOx conversion in a second downstream SCR (e.g. UF SCR)

The addition of a second urea injection point increases the complexity of the SCRs control: the second urea doser provides an extra degree of freedom for the control. The second SCR catalyst can be fed with NH3 slipping out of the SDPF and also by direct urea injection with the second doser.

With two independent dosers, the control of two SCRs requires new open-loop and closed-loop strategies. Each SCR has to be controlled to provide a given stored amount of NH3 for NOx conversion. Expensive NOx sensors have to be kept to a minimum number. Dual doser control needs to have commonality with single doser control and there need to be an avoidance of proliferation of controls and calibration methodologies

Such dual doser control can become much more complex than single doser. The 2019 publication titled "Integrated Diesel System Achieving Ultra-Low Urban and Motorway NOx Emissions on the Road" by Demuynck et al, Vienna 2019 - AECC/IAV) describes a dual doser control system. Several issues are linked with this kind of control. The Kalman filter employed breaks the link between the physical/chemical behavior of the actual system and the control, which makes it difficult for the calibrators to fine-tune the control based on physical/chemical observations. The NOx sensor located downstream of SDPF will operate with high levels of NH3 in the gas most of the time (NH3 slip from SDPF). This is due to fact that a SDPF requires high level of NH3 filling to perform at its highest possible efficiency. NOx sensors being cross-sensitive to NH3, the estimation of NH3 concentration and NOx concentration downstream of SDPF are very inaccurate. The signals will typically be less accurate than the delivery accuracy of state-of-the-art dosing systems. Moreover, NOx sensors greatly increase the total cost of an SCR system. Adding this extra sensor should be avoided if not absolutely required.

A further problem is the inaccuracy of the NH3 signal (and NOx) between SDPF and SCR, combined with the activation of the second doser makes it very risky to correct the dosing flow of the second doser (closed-loop): a drift of the front doser can wrongly be identified as a drift of the second doser, when closing the loop with the rear NOx sensor. In case of urea slip due to poor mixing / degraded front SCR, this becomes even more obvious that the second closed loop wrongly corrects the second doser.

The added complexity of the above control and its additional NOx sensor are difficult to justify because the second doser is mainly (/only) intended to be used in very high exhaust temperature conditions such as DPF regeneration. In normal conditions, it is actually detrimental to the global NOx performance of the system to control the rear SCR with the second doser instead of overfilling the front SCR to generate extra NH3: the SDPF performance greatly increases when it is saturated with NH3, which is the case when the front doser is used to control both SCR catalysts.

The documents EP3486444A1, DE102015207881A1, US2017/130637A1 and US9822683B2 disclose SCR catalyst system which comprises at least one first SCR catalyst device and at least one second SCR catalyst device.

### SUMMARY OF THE INVENTION

In one aspect is provided a method of control for a vehicle exhaust system, said vehicle exhaust system including a first SCR unit, and a second SCR unit located downstream of said first SCR unit, and including a first urea doser adapted to inject urea reductant upstream of said first SCR unit, and a second urea doser located upstream of said second SCR unit and adapted to inject urea upstream of said second catalytic unit, said method comprising the steps of :
providing a model or MAP of said second SCR unit, adapted to provide a demand signal for said second doser; said model or MAP including one or more stored parameters indicative of characteristics of the second SCR unit and/or dosers therefore; said method further including subsequent to operation of the first doser;
the steps of
   a) switching off the operation of the first doser;
   b) operating said second doser for a flushing period of time;
   c) after expiry of said flushing period, running the second SCR in closed loop control,
   d) updating said model or MAP it and doser during said closed loop control.

Step d) may comprise updating said parameter(s).

Said second doser may be operated in open loop control.

Said demand signal for said second doser is dependent on said parameters stored respectively in said models/MAP of said second SCR.

Said flushing period is preferably sufficient such that the first SCR is empty of NH3/urea.

The flushing time is preferably sufficient that additionally the second SCR unit is operating under conditions where there is no effect on NH3 level stored on said second SCR unit of previous operation of the first SCR unit doser.

The flushing time is preferably sufficient for the second SCR unit and doser to be working under steady state conditions.

According to the invention, the method comprises the additional steps of:
i) providing a value for NH3 storage on said first SCR units
ii) determining the flow rate of potentially converted NH3 equivalent NOx flowing into the first SCR;
iii) integrating the product of the flow rate from ii) multiplied by the NOx conversion efficiency for said first SCR unit over time
iv) comparing the value of step iii) and step i) determining the flushing time is finished when the value determines form step iii) substantially reaches said NH3 storage value of step i)

Said value in step 1 may be based on the maximum storage capacity of the first SCR.

The method may including additionally;
v) providing a value for NH3 storage on said second SCR unit
vi) determining the flow rate of NOx flowing out of the first SCR;
vii) integrating the product of the flow rate form vi) multiplied by the NOx conversion efficiency of said second SCR unit over time;
iv) comparing the value of step vi) and step v) and determining the flushing time is finished when in addition, the value determined from step vii) substantially reaches said NH3 storage value of step v).

The value in step v) may be based on the maximum storage capacity of the first second

The method may include providing a model or MAP of said first SCR unit,
said model or MAP including one or more stored parameters indicative of characteristics of the first SCR unit and/or dosers therefore and adapted to provide a demand signal for said first doser and/or to provide an estimate of the NOx flowing out of said first SCR unit.

The demand signal for said first doser may be dependent on said parameters stored said models/MAPs of said first SCR.

The method may include subsequent to step d); of;
e) turning off operation of said second SCR doser;
f) turning on operation of said first SCR doser in closed loop control;
g) subsequently updating said stored parameters of said model of said fisrt SCR unit.

The method may include providing a second flushing period between steps e) and f).

Said exhaust system may have a NOX sensor located downstream of said second SCR unit, said sensor being used to provide feedback control during said closed loop operation(s).

### BRIEF DESCRIPTION OF THE DRAWINGS

The present invention is now described by way of example with reference to the accompanying drawings in which:
- Figure 1 shows an example of an exhaust system with dual SCR in which embodiments of the invention can be performed;
- Figure 2 shows a control system which may be employed in aspects of the invention;
- Figure 3 above shows how the flushing quantity and time can be calculated;
- Figure 4 illustrates how the flushing period may be calculated.

### DESCRIPTION OF THE PREFERRED EMBODIMENTS

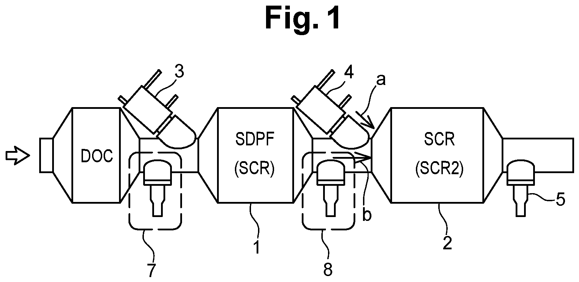

Figure 1 shows an example of an exhaust system with dual SCR in which embodiments of the invention can be performed. It shows a portion of a vehicle exhaust system having dual doser/SCR after- treatment. Essentially there is a first upstream SCR (e.g. SDPF ) unit 1 and a second SCR downstream 2 therefrom. There is a first urea doser 3 adapted to dose urea/reductant upstream of the first unit and a second urea/reductant doser/injector 4 adapted to inject urea/reductant upstream of the second unit (and downstream of the first unit) and shown in figure 1, where SDPF stands for SCR on DPF. There is also located a NOx sensor 5 as shown. Typically a NOx sensor 7 is required to measure the NOx into the system (into the first SCR unit) and used as an input in control. Prior art system include a further NOx sensor 8 located between first and second SCR unit

In the figure, the "a" represents the NH3 (slip) form the first catalytic unit and "b" represents the NH3 flow provided by the second urea doser.

### Background to Closed-loop (CL)

NOx conversion efficiency depends on the catalyst temperature. As a result, SCR control generally involves: an open-loop dosing of reducing agent based on maps or based on chemical modelling of the SCR system; closed-loop correction of the dosing with a post-SCR exhaust sensor, typically a NOx sensor. It can also be regarded that the closed loop use of the post SCR exhaust sensor is used generally to be fed back (e.g. via a model) to provide fine control.

SCR catalysts used on passenger cars are usually based on Cu or Fe zeolites, which exhibit a significant NH₃ storing capacity. This capacity acts as a buffer for NOx conversion and NH₃ slip. Drift occurs when SCR units e.g. deteriorate with time and thus lose efficiency. Various systems are know where such drift is corrected using a closed loop feedback control wherein a downstream NOX sensor is used in a feedback control loop to correct or adjust the urea command signal for the doser corresponding to that SCR unit. In such systems, as described in e.g. a model/map is typically provided for first and or SCR units which may have various model inputs including e.g. NOx in (e.g. from NOx sensor 7), and NOx out from downstream NOx sensor. The models may have outputs of NH3 flow and stored NH3 mass which is used to determine a urea command signal for the respective doser. Stored map/model parameters such as NOx conversion efficiency is stored in the model and is also used to provide the urea dosing command signal. So in order to compensate for drift, i.e, a change in NOx conversion efficiency, a downstream NOx sensor signal is either input to the model(s) or input to further control blocks to provide corrected urea injection command for the urea injector.

A problem with using such control methodology in dual systems with first and second SCR units and respective dosers is that control becomes more complex. This also requires more than one NOx sensor.

A specific problem is drift of the second SCR unit and dosing system. If the NOx conversion efficiency conversion of the second SCR changes, it is difficult to determine this and if not accurately determined, even when the second SCR is turned off and only the first doser is operational, the system will not operate according to requirements. It is difficult and complex to accurately control and requires extra sensor 8 in order to do this.

The inventors have determined a method whereby characteristic parameters such as the NOx conversion efficiency of the second unit can be accurately determined for use in the control of dual systems, both when the second SCR unit is used on its own and also when the first SCR unit is used on its own, and further more requires no additional 8 NOx sensor.

With regard to a dual SCR unit/doser system, the second (downstream) doser is not meant to be used in most of normal vehicle operations, while the first doser is meant to be off when the second doser operates. The feed-forward control presented in e.g. the Applicant co-pending application then favoritizes single operation of one or the other doser.

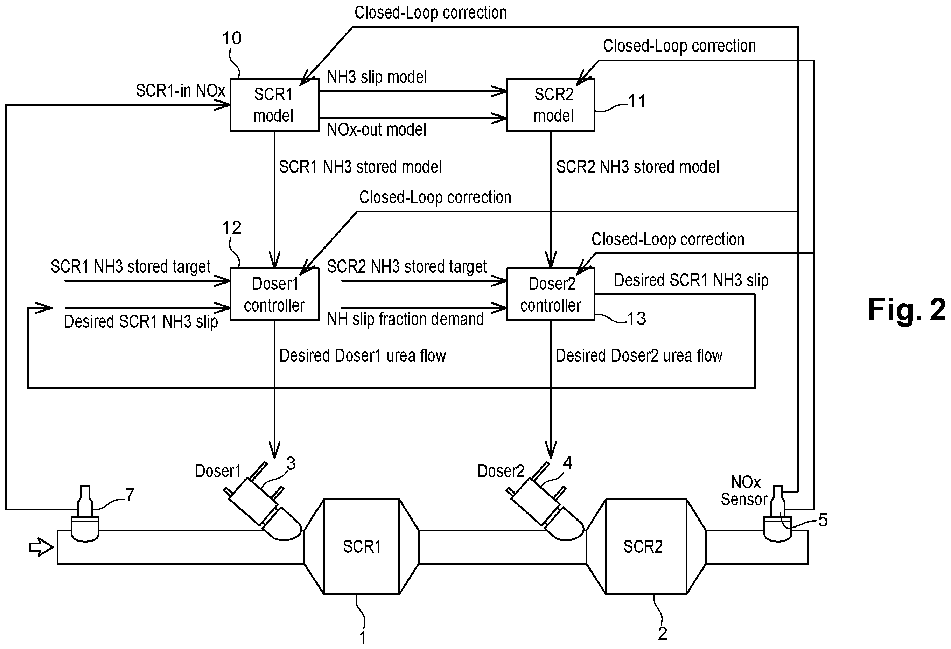

Figure 2 shows a control system which may be employed in aspects of the invention. The bottom portion of the figure represents an exhaust system similar to that of figure 1.

The top portion shows how the control of a doser controller 12 (for doser 3 ) and doser controller 13 (for doser 4) is performed. Essentially there are two models; a model 10 of the first SCR unit and a model 11 of the second SCR unit. A NOx sensor signal from a downstream sensor 5 (see figure 1) is input to both model of the first SCR unit and also the model of the second SCR unit; the signal is important to provide a value for closed loop control. The models have various inputs as is well known in the art and shown in the figure.

It is important to understand that with respect to each SCR model and its respective doser controller, these may be combined or envisaged as one unit.

A further important point is that there may be other inputs not shown such as temperature sensor inputs or (e.g. demand) inputs form the ECU which are not shown.

Model 10 for the first SCR has an input from upstream NOX sensor 7. The outputs form the dosers are desired (demand) urea flow for the respective dosers.

The first model 10 determines a NH3 slip form the model and a NOx output and these are input to the second model. The first and second model determine first and second SCR unit NH3 stored (model) which are input to the respective dosers. Inputs to the doser controllers are first and second NH3 stored target respectively. The stored Nh3 targets are basically calibration maps (in the ECU) which in advanced system included "smart" modifiers that we described in previous patents

. Input to the first doser controller is the desired SCR1 NH3 slip, which may be an output of the second SCR doser controller (or model), Input to the second doser controller (or model) may be the NH3 slip fraction demand.

The respective SCR models determine parameters of characteristics for the respective SCR units such as NOX conversion efficiency for each of the first and second SCR units. In addition, the NH3 stored on each SCR unit is determined.

Depending on the NOx conversion efficiency, and other inputs, a urea command signal is determined which is sent to the respective doser. The first SCR model will also determine a NH3 slip value, that is NH3 going from the first SCR unit doser to the second, which is input to the second SCR model. So examples of the invention use some known techniques of processing of the NOx sensor signal employs known features of the embedded control strategy, such as an SCR catalyst model which determines NOx conversion efficiency, as well as outputs e/g. stored NH3 on the SCR unit and the (converted NH3) flow through the unit (slip) model. Such models are known in the art; a particularly preferred SCR catalyst model and NOx conversion efficiency model are described in European patent application no. 07 253 090.0, which is incorporated herein by reference.

### Description of Invention

### Basic Example

In examples of the invention, after the operation of the first doser is terminated i.e. switched off, the system is run in open loop (where only the second SCR unit/doser is operational) (i.e. feed forward control) for a period referred to hereinafter as "flushing time".

A sufficient "flushing time" is provided such where NOx from the engine flows through the system to purge the NH3 stored in the first catalyst. Only thereafter is the system switched to closed loop control (with only second doser operational) and operational parameters of the second SCR (e.g. model parameters) such a NOx conversion efficiency are then updated. This is done in the closed loop control which uses feedback e.g. of the downstream NOx sensor 5.

Thus the first SCR is flushed for sufficient time to purge the NH3 stored on the first SCR. Any subsequent operation of the second SCR unit means that there is no NH3 slip from the first SCR unit. This means the dual system is effectively working as a single SCR system which allows the second SCR model to be updated and any drift corrected.

### Refined Example

Again before measurement of NOx out is used to update the second SCR model parameters (NOx conversion efficiency), the flushing time is such that preferably as well as flushing such that the first SCR is depleted of NH3 stored thereon, the total flushing time is such that the operation of the second SCR unit and doser reaches a stable steady state and/or where the NH3 on the second SCR is not overfilled or underfilled. This is because there may otherwise be errors transient errors as a result of switching) or simply because the front doser may have been drifting while the second doser is OK) where the second SCR may be overfilled (or underfilled) even when the first SCR is depleted of NH3. So it is ensured that control of the second SCR reaches a steady balanced state before the appropriate measurements are taken to update second SCR model parameters.

To make an analogy, consider that "red" urea is dosed with the front doser, and that the doser is faulty (injecting too much but it is not known). Both SCRs are then filled with "red" NH3.

When the front doser is switched off and the second activated, and starts dosing "blue" urea, without error (it is not still known if it is without error) ,before activating the closed loop on the second doser/SCR, it is needed to make sure all the red urea has been replaced by blue urea or by no urea at all (in the first SCR), and we know that the red urea will only disappear from both SCRs thanks to NOx or reduction of NH3 storage capacity=f(T) in both SCRs. It is not required for catalysts to actually be empty of NH3, but it is required that all the red NH3 is replaced by blue NH3, because we the CL to correct blue urea (/NH3) only and not the red. So in such a refined embodiment the flushing time may be such that there is also no NH3 stored on the second SCR unit which has come from the first SCR unit. How this is done will be explained in example later.

In a preferred example as will be explained, the flushing time is minimized, which also minimize the time there is no closed loop control (open loop only).

After, the flushing period, the system is switched from open loop to closed loop control with just the second SCR unit and doser operational, and any errors/drift in the second SCR system can be determined and characteristic parameters, e.g. the NH3 conversion efficiency, in the second model can be updated. After this when switching to using just the first SCR system /doser, the second SCR model is fully accurate and the NOx sensor downstream can be used with the accurate second SCR model to update the model parameters (e.g. NOX conversion efficiency) of the first model, as will be explained hereinafter with respect to "Further Subsequent Refinements".

### Further Subsequent Refinements

When the rear doser has been off sufficiently long (again after a flushing period) the methodology employed in subsequent closed loop control of the front SCR system assumes that any drift detected by the rear NOx sensor can be imputed to either the front doser or the front catalyst (SDPF) because the rear SCR is supposed to degrade much less than the front SCR (SDPF). The reason is that aging mainly consists in thermal degradation or poisons, which first impact SDPF. Thus subsequent to the methodology described in the examples, after a sufficient time which may include a second flushing period, the system is switched to operation of the first doser only in closed loop control where the downstream NOx sensor is used in feed back control and the operational control parameters (e.g. stored parameters) in the first model, such as NH3 efficiency of the first SCR unit) 10 are updated. During the second flushing period the system is run in open loop (feed forward control) and the flushing time may be that required to deplete NH3 on the second SCR unit.

Using techniques according to all the above examples, only one post SCR unit NOx sensor need to be used. So according to examples methodology robustly correct independent drifts of the individual dosers and SCR catalysts using closed-loop control based using the above techniques.

An important point is that the drifts of the SCR units/doers units in a dual system can be performed independently .

The term "flushing" as used hereinafter to describe when NOX is allowed to flow through the system for a while so as to deplete the NH3 stored in the first SCR (so there is subsequently no slip of NH3 to the second doser) and optionally additionally to ensure the (subsequent) operation second SCR /doser system reaches a steady stable state where e.g. none of the NH3 on the second SCR unit has come from slip (the first SCR unit).

So a further advantage of correcting the second SCR in this warm operation is that the corrected model of the second SCR can then be assumed to be correct when the closed loop operates on the front doser and front SCR (SDPF). This is important because the closed loop control only relies on the rear NOx sensor, which then measures the total conversion efficiency and NH3 slip of the complete SDPF+SCR system. Being able to correct the second SCR individually is then a major advantage for a robust control.

When operating at higher temperature, such as DPF regen, the front doser is shutoff. When the front doser has been off long enough (again see "flushing" below), any impact of the front (first SCR and doser) on the rear SCR catalyst of a drift from the front doser or SCR (SDPF) is assumed to have been "erased" and the closed loop control then fully impute potential tailpipe NOx/NH3 deviations to the second doser and/or second SCR.

### Example of Flushing time Calculation

### Example 1

As explained above, when alternating from one doser to the other, the closed loop control will not be accurate and so preferably disabled for some time (flushing time), to make sure that a potential drift of one doser (/SCR catalyst) is not considered by the closed loop as a drift of the doser currently being operated.

In methods according to the invention, the control then introduces a feature which determines an adequate flushing time and (preferred) keeps this to a minimum; this also minimizes the time when the closed-loop is de-activated. This flushing period is based on the embedded chemical model of each SCR catalyst. During deactivation of the closed loop control during the flushing period there is preferably open loop control, though this is not essential.

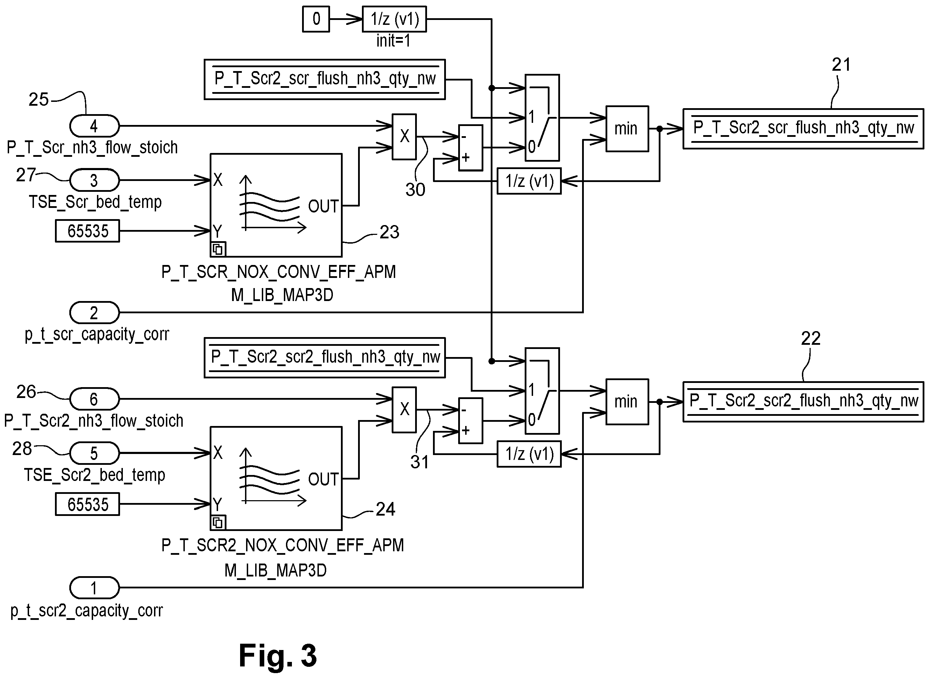

The figure 3 above shows how the flushing quantity and time can be calculated. The figure is broadly divided into a top portion and bottom portion.. In the top portion is shown the principle of how the first SCR unit flushing quantity *P_T_Scr2_scr_flush_nh3*_*qty_nvv* designated with reference numeral 21 is determined that is the quantity of stored NH3 which needs to be depleted from the first SCR unit during a flushing period.

The bottom portion shows how the flushing quantity for the second unit *P_T_Scr2_scr2_flush_nh3*_*qty_nvv* (22) is determined, that is quantity of stored NH3 which should be preferably also be needed to be depleted from the second SCR unit during a flushing period.

*p_t_scr_capacity_corr* and *p_t_scr2*_*capacity_corr* are respective NH3 storage capacities of the SCR unit (and this may be multiplied by a calibratable safety margin). In any operating condition, regardless of any drift in the system, the control can safely assume that any of the SCR catalyst has not stored more than their respective *p_t_scr_capacity_corr* and *p_t_scr2_capacity_corr* mg of NH3.

The calculation is enabled when the first doser is commanded off. At first calculation step, *P_T_Scr2_scr_flush_nh3*_*qty_nvv* and *P_T_Scr2_scr2_flush_nh3*_*qty_nvv* are initialized to their respective *p_t_scr_capacity_corr* and *p_t_scr2*_*capacity_corr* mg of NH3.

*P_T_Scr_nh3_ flow_stoich* (designated by reference numeral 25) and *P_T_Scr2_nh3_flow_stoich* (designated by reference numeral 26) represent the NH3 equivalent of inlet NOx mass flows in each respective catalyst/catalytic unit. The first value 25 may be obtained from the upstream NOx sensor. The second may be obtained from the first SCR model 10 (NOx-out model see figure 2); this may be calculated on the basis of NOx in (to the first SCR and the assumed modelled NH3 conversion efficiency of the first SCR).

For each SCR unit a NOx conversion efficiency table is provided, 23 and 24 respectively for the first and second SCR unit. They each have input from the respective current catalyst temperature. The output is the corresponding maximum possible efficiency of each catalyst. Considering that the SCRs are full of NH3 (65535mg = max of the range) is required because the catalysts are potentially filled with NH3 if the doser is stuck open or drifting.

For each SCR unit, the respective values of *P_T_Scr_nh3_flow_stoich* 25 and *P_T_Scr2_nh3_flow_stoich* 26 are multiplied by the respective NH3 conversion efficiencies of the SCR units, to determine the amount of NH3 depleted from the respective SCR units (30,31). The conversion efficiencies are designated *P_T_SCR_NOX_CONV_EFF_APM* and *P_T_SCR2_NOX_CONV_EFF_APM* for first and second SCR units respectively.

The potentially converted NH3-equivalent NOx are then decumulated from *P_T_Scr2_scr_flush_nh3*_*qty_nvv* and *P*_*T_Scr2_scr2_flush_nh3*_*qty_nvv*. by the blocks generally shown as 30 and 31 respectively.

*P_T_Scr2_scr_flush_nh3*_*qty_nvv* and *P_T_Scr2_scr2_flush_nh3*_*qty_nvv*, which are an indication of the flushing state of each SCR (in terms of noisy impact on the other doser / SCR drift) is continuously limited by *p_t_scr_capacity_corr* and *p_t_scr2*_*capacity_corr,* which greatly reduces the flushing period in case of temperature increase.

In one example the flushing period may end when the NH3 stored on the first SCR unit is calculated to be substantially zero or less.

In a preferred embodiment when **both** *P_T_Scr2_scr_flush_nh3*_*qty_nvv* and *P_T_Scr2_scr2_flush_nh3*_qty_nvv reach 0, the complete SCR system (front doser + SDPF + rear doser + SCR) is assumed to have been "cleaned" (/flushed) from any impact of front doser and/or first SCR (SDPF) drifts. The closed-loop on the second doser and second SCR can then be activated.

### Flow Chart

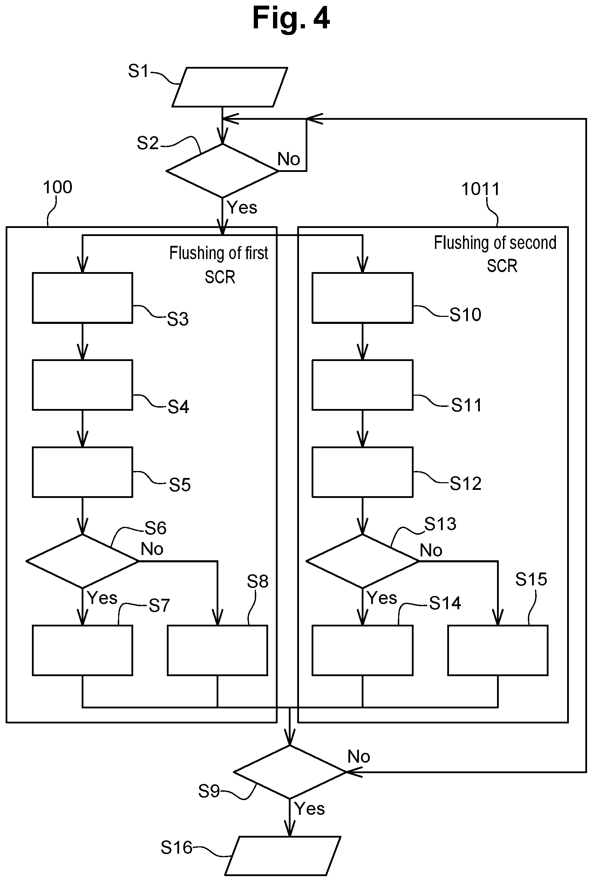

The flow chart of figure 4 illustrates also the how the flushing period may be calculated and mirrors essentially the process of figure 3.

The process is initiated or starts at step block S1. The methodology proceeds to block S2 where whether it is determined if the first doser is shut off. i.e. *P_T_Scr_urea_mass_flow* = *0.*

If not the process returns to step S2 and continually monitors whether the doser is shut off.

When the doser is shut off the process moves to implement two sub-processes/routines shown in blocks 100 and 101.

In the first block 100, in step S3 the maximum NH3 quantity in the first SCR (is initialized to be set to maximum corrected capacity. *P_T_Scr2_scr_flush_nh3*_*qty_nvv* = *p_t_scr_capacity_corr* . In enhanced embodiments the NH3 stored may be provided more accurately by calculation e.g. from the model/operational history

In the next step S4 the potentially converted NH3 equivalent NOx is calculated by multiplying the parameters : *P_T_Scr_nh3_flow_stoich* × *P_T_SCR_NOX_CONV_EFF_APM.* The parameters are defined and determined as described above with reference to figure 3.

In the next step S5 the potentially converted NH3 equivalent NOx is subtracted from the current maximum NH3 quantity to give a corrected NH3 capacity (corrected value of the NH3 stored on the SCR unit) .

In the next step S6 it is determined if the result is lower than the corrected SCR capacity. If so the maximum NH3 capacity is set to the result at step S7. If not at step S8 the maximum NH3 quantity is set is set to the corrected SCR capacity. After steps S7 or S8 the process proceeds to step S9

There is a similar process shown in the right hand side box with respect to the second SCR.

In step the second routine, in step S10 the maximum NH3 quantity in the second SCR is initialized to be set to maximum corrected capacity. P_*T_Scr2_scr2_flush_nh3*_*qty_nvv* = *p_t_scr2*_*capacity_corr*

In the next step S11 the potentially converted NH3 equivalent NOx is calculated form multiplying the parameters *P_T_Scr2_nh3_flow_stoich* × *P_T_SCR2_NOX_CONV_EFF_APM.*

In the next step S12 the potentially converted NH3 equivalent NOx is subtracted from the current maximum NH3 quantity to give a corrected SCR NH3 stored (capacity).

In the next step S13 it is determined if the result is lower than the corrected second SCR capacity. If so at step S14 the maximum NH3 capacity for the second SCR is set to the result of step S13 . If not at step S15 the maximum NH3 quantity is set is set to the corrected second SCR capacity. After steps S14 or S15 the process proceeds to step S9

At step S9 it is determined if the maximum NH3 quantity for the first SCR and for the second SCR is equal to zero. If so the process proceeds to step S16 where it is concluded that the SCR system has had sufficient flushing time. If not the process returns to S2

Some additional advantages are that same control and calibration can be applied to a single doser application. The methods does not require an extra (expensive) NOx sensor between both SCR catalysts and provides robust corrections of individual components (dosers and SCR catalysts

## Claims

1. A method of control for a vehicle exhaust system, said vehicle exhaust system including a first SCR unit (1), and a second SCR unit (2) located downstream of said first SCR unit, and including a first urea doser (3) adapted to inject urea reductant upstream of said first SCR unit (1), and a second urea doser (4) located upstream of said second SCR unit (2) and adapted to inject urea upstream of said second catalytic unit (2), said method comprising the steps of :
providing a model or MAP of said second SCR unit, adapted to provide a demand signal for said second doser; said model or MAP including one or more stored parameters indicative of characteristics of the second SCR unit and/or the doser therefor; said method further including subsequent to operation of the first doser (3); the steps of
a) switching off the operation of the first doser (3);
b) operating said second doser (4) for a flushing period of time;
c) after expiry of said flushing period, running the second SCR unit (2) in closed loop control,
d) updating said model or MAP during said closed loop control, **characterized in that** flushing period is sufficient such that the first SCR unit (1) is empty of NH3/urea by the steps of:
i) providing a value for NH3 storage on said first SCR unit (1)
ii) determining the flow rate of potentially converted NH3 equivalent NOx flowing into the first SCR unit (1);
iii) integrating the product of the flow rate from ii) multiplied by the NOx conversion efficiency for said first SCR unit (1) over time
iv) comparing the value of step iii) and step i) determining the flushing time is finished when the value determines form step iii) substantially reaches said NH3 storage value of step i)

2. A method as claimed in claim 1 wherein step d) comprises updating said parameter(s).

3. A method as claimed in claims 1 or 2 wherein in step b) said second doser (4) is operated in open loop control.

4. A method as claimed in claim 1 to 3 wherein the demand signal for said second doser (4) is dependent on said parameters stored respectively in said models/MAP of said second SCR unit (2).

5. A method as claimed in claims 1 to 4 where the flushing time is sufficient that additionally the second SCR unit (2) is operating under conditions where there is no effect on NH3 level stored on said second SCR unit (2) of previous operation of the first SCR unit doser (3).

6. A method as claimed in claims 1 to 5 where flushing time is sufficient for the second SCR unit (2) and doser (4) to be working under steady state conditions.

7. A method as claimed in claim 1 to 6 wherein said value in step i) is based on the maximum storage capacity of the first SCR (1).

8. A method as claimed in claims 1 to 7 including additionally;
v) providing a value for NH3 storage on said second SCR unit (2);
vi) determining the flow rate of NOx flowing out of the first SCR;
vii) integrating the product of the flow rate form vi) multiplied by the NOx conversion efficiency of said second SCR unit (2) over time;
iv) comparing the value of step vi) and step v) and determining the flushing time is finished when in addition, the value determined from step vii) substantially reaches said NH3 storage value of step v).

9. A method as claimed in claim 8 wherein said value in step v) is based on the maximum storage capacity of the first SCR unit (1).

10. A method as claimed in claims 1 to 9 including providing a model or MAP of said first SCR unit (1),
said model or MAP including one or more stored parameters indicative of characteristics of the first SCR unit and/or dosers therefore and adapted to provide a demand signal for said first doser (3) and/or to provide an estimate of the NOx flowing out of said first SCR unit (1).

11. A method as claimed in claim 10 wherein the demand signal for said first doser (3) is dependent on said parameters stored in said models/MAPs of said first SCR unit (1).

12. A method as claimed in claims 1 to 11 including subsequent to step d); of;
e) turning off operation of said second SCR doser (4);
f) turning on operation of said first SCR doser (3) in closed loop control;
g) subsequently updating said stored parameters of said model of said first SCR unit (1).

13. A method as claimed in claims 12 including providing a second flushing period between steps e) and f).

14. A method as claimed in claims 1 to 13 wherein said exhaust system has a NOX sensor located downstream of said second SCR unit (2), said sensor being used to provide feedback control during said closed loop operation(s).

## Patentansprüche

1. Verfahren zur Steuerung eines Fahrzeugabgassystems, wobei das Fahrzeugabgassystem Folgendes aufweist: eine erste SCR-Einheit (1) und eine zweite SCR-Einheit (2), die stromabwärts der ersten SCR-Einheit angeordnet ist, sowie eine erste Harnstoff-Dosiereinrichtung (3), die so ausgelegt ist, dass sie Harnstoff-Reduktionsmittel stromaufwärts der ersten SCR-Einheit (1) einspritzt, und eine zweite Harnstoff-Dosiereinrichtung (4), die stromaufwärts der zweiten SCR-Einheit (2) angeordnet ist und so ausgelegt ist, dass sie Harnstoff stromaufwärts der zweiten katalytischen Einheit (2) einspritzt, wobei das Verfahren die folgenden Schritte umfasst:
Bereitstellen eines Modells oder MAP der zweiten SCR-Einheit, das geeignet ist, ein Anforderungssignal für die zweite Dosiereinrichtung bereitzustellen;
wobei das Modell oder MAP einen oder mehrere gespeicherte Parameter aufweist, die Eigenschaften der zweiten SCR-Einheit und/oder der Dosiereinrichtung dafür anzeigen; wobei das Verfahren ferner nach dem Betrieb des ersten Dosiereinrichtung (3) die folgenden Schritte umfasst:
a) Abschalten des Betriebs der ersten Dosiereinrichtung (3);
b) Betreiben der zweiten Dosiereinrichtung (4) für einen Spülzeitraum;
c) Laufenlassen der zweiten SCR-Einheit (2) im geschlossenen Regelkreis nach Ablauf des Spülzeitraums,
d) Aktualisieren des Modells oder MAP während des Regelns, **dadurch gekennzeichnet, dass** der Spülzeitraum ausreichend ist, damit die erste SCR-Einheit (1) leer von NH3/Harnstoff durch die folgenden Schritte ist:
i) Bereitstellung eines Wertes für die NH3-Speicherung in der ersten SCR-Einheit (1)
ii) Bestimmen der Durchflussrate von potenziell umgewandeltem NH3-Äquivalent-NOx, das in die erste SCR-Einheit (1) fließt;
iii) Integrieren des Produkts aus der Durchflussrate von ii) multipliziert mit dem NOx-Umwandlungswirkungsgrad für die erste SCR-Einheit (1) über die Zeit
iv) Vergleichen des Wertes aus Schritt iii) und Schritt i) Bestimmen, dass der Spülzeitraum beendet ist, wenn der aus Schritt iii) bestimmte Wert im Wesentlichen den NH3-Speicherwert aus Schritt i) erreicht.

2. Verfahren nach Anspruch 1, wobei Schritt d) das Aktualisieren des/der Parameter(s) umfasst.

3. Verfahren nach Anspruch 1 oder 2, wobei in Schritt b) die zweite Dosiereinrichtung (4) im offenen Regelkreis betrieben wird.

4. Verfahren nach einem der Ansprüche 1 bis 3, wobei das Anforderungssignal für die zweite Dosiereinrichtung (4) von den Parametern abhängt, die jeweils in den Modellen/MAP der zweiten SCR-Einheit (2) gespeichert sind.

5. Verfahren nach einem der Ansprüche 1 bis 4, wobei der Spülzeitraum ausreichend ist, so dass zusätzlich die zweite SCR-Einheit (2) unter Bedingungen betrieben wird, bei denen der vorherige Betrieb der Dosiereinrichtung (3) der ersten SCR-Einheit keine Auswirkung auf den in der zweiten SCR-Einheit (2) gespeicherten NH3-Gehalt hat.

6. Verfahren nach einem der Ansprüche 1 bis 5, bei dem der Spülzeitraum ausreichend dafür ist, dass die zweite SCR-Einheit (2) und die Dosiereinrichtung (4) unter stationären Bedingungen arbeiten.

7. Verfahren nach einem der Ansprüche 1 bis 6, wobei der Wert in Schritt i) auf der maximalen Speicherkapazität der ersten SCR (1) basiert.

8. Verfahren nach einem der Ansprüche 1 bis 7, das zusätzlich Folgendes umfasst:
v) Bereitstellen eines Wertes für die NH3-Speicherung an der zweiten SCR-Einheit (2);
vi) Bestimmen der Durchflussrate von NOx, das aus der ersten SCR-Einheit abfließt;
vii) Integrieren des Produkts aus der Durchflussrate aus vi) multipliziert mit dem NOx-Umwandlungswirkungsgrad der zweiten SCR-Einheit (2) über die Zeit;
viii) Vergleichen des Wertes aus Schritt vi) und Schritt v) und Bestimmen, dass der Spülzeitraum beendet ist, wenn zusätzlich der aus Schritt vii) bestimmte Wert im Wesentlichen den NH3-Speicherwert aus Schritt v) erreicht.

9. Verfahren nach Anspruch 8, wobei der Wert in Schritt v) auf der maximalen Speicherkapazität der ersten SCR-Einheit (1) basiert.

10. Verfahren nach einem der Ansprüche 1 bis 9, einschließlich der Bereitstellung eines Modells oder MAP der ersten SCR-Einheit (1),
wobei das Modell oder das MAP einen oder mehrere gespeicherte Parameter enthält, die Eigenschaften der ersten SCR-Einheit und/oder von Dosiereinrichtungen dafür anzeigen, und geeignet ist, ein Anforderungssignal für die erste Dosiereinrichtung (3) bereitzustellen und/oder eine Schätzung des aus der ersten SCR-Einheit (1) ausströmenden NOx zu liefern.

11. Verfahren nach Anspruch 10, wobei das Anforderungssignal für die erste Dosiereinrichtung (3) von den in den Modellen/MAPs der ersten SCR-Einheit (1) gespeicherten Parametern abhängig ist.

12. Verfahren nach einem der Ansprüche 1 bis 11, welche im Anschluss an Schritt d) Folgendes umfasst:
e) Abschalten des Betriebs der zweiten SCR-Dosiereinrichtung (4);
f) Einschalten des Betriebs der ersten SCR-Dosiereinrichtung (3) im geschlossenen Regelkreis;
g) anschließendes Aktualisieren der gespeicherten Parameter des Modells der ersten SCR-Einheit (1).

13. Verfahren nach Anspruch 12, einschließlich der Bereitstellung eines zweiten Spülzeitraums zwischen den Schritten e) und f).

14. Verfahren nach einem der Ansprüche 1 bis 13, wobei das Abgassystem einen NOX-Sensor aufweist, der stromabwärts der zweiten SCR-Einheit (2) angeordnet ist, wobei der Sensor verwendet wird, um eine Rückkopplungssteuerung während des Betriebs (der Betriebe) im geschlossenen Regelkreis bereitzustellen.

## Revendications

1. Procédé de commande pour un système d'échappement de véhicule, ledit système d'échappement de véhicule comprenant une première unité RCS (1) et une seconde unité RCS (2) située en aval de ladite première unité RCS, et comprenant un premier dispositif de dosage d'urée (3) conçu pour injecter un agent de réduction à base d'urée en amont de ladite première unité RCS (1) et un second dispositif de dosage d'urée (4) situé en amont de ladite seconde unité RCS (2) et conçu pour injecter de l'urée en amont de ladite seconde unité catalytique (2), ledit procédé comprenant les étapes de :
fourniture d'un modèle ou MAP de ladite seconde unité RCS, convenant à la fourniture d'un signal de demande pour ledit second dispositif de dosage ; ledit modèle ou MAP comprenant un ou des paramètres enregistrés indicateurs de caractéristiques de la seconde unité RCS et/ou de son dispositif de dosage ; ledit procédé comprenant en outre, après la mise en action du premier dispositif de dosage (3), les étapes de :
a) arrêt du fonctionnement du premier dispositif de dosage (3) ;
b) mise en action dudit second dispositif de dosage (4) pour une période de nettoyage ;
c) après expiration de ladite période de nettoyage, fonctionnement de la seconde unité RCS (2) en régulation en boucle fermée ;
d) mise à jour dudit modèle ou MAP pendant ladite régulation en boucle fermée, **caractérisé en ce que** la période de nettoyage est adaptée de sorte que la première unité RCS (1) soit vide de NH₃/urée grâce aux étapes de :
i) fourniture d'une valeur pour le stockage de NH₃ dans ladite première unité RCS (1) ;
ii) détermination du débit de NOx équivalent à NH₃ potentiellement converti entrant dans la première unité RCS (1) ;
iii) intégration du produit du débit déterminé à l'étape ii) par le rendement de conversion de NOx pour ladite première unité RCS (1) dans le temps ;
iv) comparaison des valeurs de l'étape iii) et de l'étape i) et détermination de la fin de la période de nettoyage au moment où la valeur déterminée à l'étape iii) atteint pratiquement ladite valeur de stockage de NH₃ de l'étape i).

2. Procédé selon la revendication 1, dans lequel l'étape d) comprend la mise à jour dudit (desdits) paramètre(s).

3. Procédé selon les revendications 1 ou 2, dans lequel, dans l'étape b), ledit second dispositif de dosage (3) fonctionne en régulation en boucle ouverte.

4. Procédé selon les revendications 1 à 3, dans lequel le signal de demande pour ledit second dispositif de dosage (4) dépend desdits paramètres enregistrés respectivement dans lesdits modèles/MAP de ladite seconde unité RCS (2).

5. Procédé selon les revendications 1 à 4, où la période de nettoyage est adaptée de sorte qu'en outre la seconde unité RCS (2) fonctionne dans des conditions dans lesquelles le fonctionnement antérieur du premier dispositif de dosage d'unité RCS (3) n'a pas d'effet sur le niveau de NH₃ stocké dans ladite seconde unité RCS (2).

6. Procédé selon les revendications 1 à 5, où la période de nettoyage est adaptée de sorte que la seconde unité RCS (2) et le dispositif de dosage (4) fonctionnent dans des conditions de régime permanent.

7. Procédé selon les revendications 1 à 6, dans lequel ladite valeur à l'étape i) est basée sur la capacité de stockage maximale de la première unité RCS (1).

8. Procédé selon les revendications 1 à 7, comprenant en outre :
v) la fourniture d'une valeur pour le stockage de NH₃ dans ladite seconde unité RCS (2) ;
vi) la détermination du débit de NOx sortant de la première unité RCS ;
vii) l'intégration du produit du débit déterminé à l'étape vi) par le rendement de conversion de NOx de ladite seconde unité RCS (2) dans le temps ;
viii) la comparaison des valeurs de l'étape vi) et de l'étape v) et la détermination de la fin de la période de nettoyage au moment où en outre la valeur déterminée à l'étape vii) atteint pratiquement ladite valeur de stockage de NH₃ de l'étape v).

9. Procédé selon la revendication 8, dans lequel ladite valeur à l'étape v) est basée sur la capacité de stockage maximale de la première unité RCS (1).

10. Procédé selon les revendications 1 à 9, comprenant la fourniture d'un modèle ou MAP de ladite première unité RCS (1),
ledit modèle ou MAP comprenant un ou des paramètres enregistrés indicateurs de caractéristiques de la première unité RCS et/ou de son dispositif de dosage et convenant à la fourniture d'un signal de demande pour ledit premier dispositif de dosage (3) et/ou à la fourniture d'une estimation des NOx sortant de ladite première unité RCS (1).

11. Procédé selon la revendication 10, dans lequel le signal de demande pour ledit premier dispositif de dosage (3) dépend desdits paramètres enregistrés dans lesdits modèles/MAP de ladite première unité RCS (1).

12. Procédé selon les revendications 1 à 11, comprenant, après l'étape d) :
e) arrêt du fonctionnement dudit second dispositif de dosage RCS (4) ;
f) mise en action dudit premier dispositif de dosage RCS (3) en régulation en boucle fermée ;
g) mise à jour consécutive desdits paramètres enregistrés dudit modèle de ladite première unité RCS (1).

13. Procédé selon la revendication 12, comprenant une seconde période de nettoyage entre les étapes e) et f).

14. Procédé selon les revendications 1 à 13, dans lequel ledit système d'échappement comprend un capteur de NOx situé en aval de ladite seconde unité RCS (2), ledit capteur étant utilisé pour permettre une régulation par rétroaction pendant ledit (lesdits) fonctionnement(s) en boucle fermée.
